(19) Europäisches Patentamt

European Patent Office

Office européen des brevets

(11) **EP 1 386 104 B1**

(12) **FASCICULE DE BREVET EUROPEEN**

(45) Date de publication et mention
de la délivrance du brevet:
**23.01.2008 Bulletin 2008/04**

(21) Numéro de dépôt: **02730230.6**

(22) Date de dépôt: **26.04.2002**

(51) Int Cl.:
***F16L 9/12*** *(2006.01)*

(86) Numéro de dépôt international:
**PCT/EP2002/004849**

(87) Numéro de publication internationale:
**WO 2002/088589 (07.11.2002 Gazette 2002/45)**

(54) **TUBE RENFORCE EN MATIERE PLASTIQUE ET PROCEDE DE FABRICATION DUDIT TUBE**

VERSTÄRKTES KUNSTSTOFFROHR UND VERFAHREN FÜR DESSEN HERSTELLUNG

REINFORCED PLASTIC TUBE AND METHOD FOR MAKING SAME

(84) Etats contractants désignés:
**AT BE CH CY DE DK ES FI FR GB GR IE IT LI LU
MC NL PT SE TR**
Etats d'extension désignés:
**LT LV**

(30) Priorité: **27.04.2001 BE 200100291**

(43) Date de publication de la demande:
**04.02.2004 Bulletin 2004/06**

(73) Titulaire: **egeplast
Werner Strumann GmbH & Co. KG
48268 Greven (DE)**

(72) Inventeurs:
• **DEHENNAU, Claude
B-1410 Waterloo (BE)**
• **MATZ, Pierre
B-1457 Nil Saint-Vincent (BE)**

(74) Mandataire: **Fritz & Brandenburg
Patentanwälte
Im Mediapark 4d
Postfach 19 04 80
50501 Köln (DE)**

(56) Documents cités:
**EP-A- 0 697 553        WO-A-92/01885
WO-A-99/08033**

**Description**

La présente invention concerne un tube multicouche renforcé en matière plastique constitué d'un mandrin tubulaire à base d'une composition polymérique sur lequel sont enroulées des bandes de renforcement comprenant une composition polymérique orientée, ledit tube comprenant au moins deux couches de bandes enroulées sur le mandrin, chaque couche étant constituée de bandes présentant un angle semblable et de signe opposé aux bandes de l'autre couche par rapport à la direction du tube.

Les tubes devant résister à des sollicitations mécaniques importantes telles que les tubes de grand diamètre et/ou les tubes soumis à haute pression interne peuvent être produits de manière économique en fonte ductile. Les tubes en matière plastique sont cependant préférés dans nombre de cas à la fonte en raison de leur beaucoup plus grande légèreté et de leur remarquable résistance à la corrosion.

Pour résister aussi bien que la fonte aux fortes sollicitations mécaniques, les tubes en matières plastiques traditionnelles doivent comporter une épaisseur de paroi plus élevée, ce qui en grève le coût et les rend moins compétitifs par rapport aux tubes en fonte ductile.

Par ailleurs, les tubes en matière plastique présentent souvent une faible résistance au fluage sous contrainte prolongée. Il est cependant très important, dans le cas de certains types d'utilisation, que la résistance de ces tubes, par exemple la résistance à l'éclatement, ne se dégrade pas au bout d'une longue période d'utilisation qui peut s'étendre sur parfois plusieurs dizaines d'années.

Pour résoudre ce problème, plusieurs solutions ont été envisagées. Une première solution a consisté en la production de tubes dont la matière plastique est biorientée dans les directions parallèle et perpendiculaire à l'axe du tube. L'opération de biorientation ne peut cependant être effectuée que sur le tube préalablement formé par extrusion, ce qui rend le procédé discontinu et en grève le coût Par ailleurs, le maintien de la biorientation de la matière lors de la pose de raccords nécessite l'observance de précautions particulières impliquant l'utilisation de nombreux raccords spéciaux. En outre, le renforcement obtenu selon cette technique est surtout efficace dans le sens longitudinal et ne résout que très partiellement le problème de la résistance aux efforts radiaux qui représentent les contraintes maximales dans certaines applications, par exemple le transport de fluides sous pression. Jusqu'à présent, les tentatives effectuées pour rendre le procédé de biorientation continu n'ont pas encore porté pleinement leurs fruits, en raison des contraintes technologiques et du surcoût important qu'elles induisent, en regard du gain de résistance encore insuffisant que l'on obtient.

Une autre solution a été de placer des renforts sur les tubes en matière plastique, comme par exemple l'enroulement, en continu, de fibres (en verre, par exemple) imprégnées par une résine thermoplastique ou thermodurcissable ("COFITS"). Toutefois, cette solution n'est pas non plus sans défauts, car ces enroulements sont généralement fragiles et augmentent fortement la densité du tube renforcé résultant ainsi que son coût. Par ailleurs, l'efficacité de ces renforcements ne demeure pas toujours stable au cours du temps et le recyclage du tube en fin de vie est souvent difficile en raison de l'imbrication dans le polymère du tube de matières étrangères délicates à séparer.

On connaît aussi le brevet US-A-4,093,004 qui divulgue le principe du renforcement de mandrins en diverses matières (carton, papier, caoutchouc, bois ou matière plastique) au moyen de bandes en polyoléfine orientée. Le tube renforcé obtenu ne présente cependant pas une résistance suffisante, en particulier une résistance à l'éclatement, pour être utilisé en toute sécurité pour des durées longues dans le transport de fluides sous pression.

Le document EP-A-0 697 553 révèle un tube multicouche renforcé selon la préambule de la revendication 1. Ce tube connu est fabriqué par enroulement d'un plateau annulaire de grande dimension dont l'axe de rotation coincide avec celui du mandrin, le plateau annulaire comprenant un ou plusieurs dévidoirs de faisceaux de fibres de renforcement. On peut enrouler plusieurs faisceaux de fibres de renforcement en utilisant deux tels plateaux annulaires, décalées axialement et tournant dans des sens opposés.

L'invention a pour objet de résoudre les problèmes posés par les systèmes de renforcement connus évoqués ci-dessus, tout en maintenir le coût de production dans des limites acceptables et concurrentielles avec les tubes en fonte ductile.

A cet effet, l'invention concerne un tube multicouche renforcé en matière plastique constitué d'un mandrin tubulaire à base d'une composition polymérique sur lequel sont enroulées des bandes de renforcement comprenant une composition polymérique orientée, selon lequel on sélectionne les bandes parmi celles qui vérifient la relation suivante :

$$\frac{IR}{IR_0} \geq 4$$

où :

**IR** est un indice de résistance de la bande de renforcement, calculé comme suit :

$$IR = \frac{\sigma}{\sqrt[3]{E}}$$

avec :

σ qui représente la valeur maximale de la contrainte atteinte lors d'un essai de traction des bandes dans le sens de l'orientation, pour un allongement correspondant au point de yield du mandrin ou, à défaut, au point de rupture de la bande si l'allongement en ce point de rupture est inférieur à celui de l'allongement au point de yield du mandrin,

**E** qui est le module élastique en traction des bandes orientées;

$$IR_0 = \frac{\sigma_0}{\sqrt[3]{E_0}}$$ est l'indice de résistance du mandrin;

$\sigma_0$ **et** $E_0$ sont respectivement la contrainte au point de yield et le module élastique en traction du mandrin;

dans laquelle, σ, **E**, $\sigma_0$ et $E_0$ sont exprimés dans les mêmes unités arbitraires de tension, et en ce qu'il comprend au moins deux couches de bandes enroulées sur le mandrin, chaque couche étant constituée de bandes présentant un angle semblable et de signe opposé aux bandes de l'autre couche par rapport à la direction du tube.

Dans cette définition, le vocable "angle semblable" signifie un angle au moins égal au même angle moins 5 degrés d'angle. Le vocable "angle semblable" comprend aussi un angle au plus égal au même angle plus 5 degrés d'angle. De préférence, ce vocable signifie un angle au moins égal au même angle moins 2 degrés d'angle. De préférence aussi, il comprend un angle au plus égal au même angle plus 2 degrés d'angle.

Par point de yield, on entend désigner le point de la courbe d'essai en traction : tension - allongement de la matière plastique considérée à partir duquel la tension à appliquer nécessaire pour l'obtention d'un allongement supplémentaire commence à baisser par rapport aux tensions requises pour obtenir les allongements inférieurs à celui correspondant à ce point.

Par tube renforcé, on entend désigner un tube dont les propriétés mécaniques intrinsèques de la composition de matière de base qui le constitue sont modifiées par la présence d'une composition de matière additionnelle différente de cette matière de base et qui apporte par sa présence un supplément de résistance mécanique. La composition de matière de base est une composition polymérique qui représente au moins 40 % en poids du poids total du tube renforcé. Le mandrin est constitué de la composition polymérique de base. La composition de matière additionnelle est matérialisée par les bandes de renforcement.

Par matière plastique on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi-être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra.*

Un polymère souvent employé est le polyéthylène. D'excellents résultats ont été obtenus avec du polyéthylène haute densité (PEHD).

Le constituant de base du tube renforcé selon l'invention est un mandrin tubulaire, c'est-à-dire un objet creux en forme de tube. Il est constitué, au moins partiellement, d'une composition polymérique.

Des autres constituants du tube renforcé selon l'invention sont les bandes de renforcement qui comprennent une composition de matière additionnelle apportant le supplément de résistance mécanique nécessaire pour conférer au tube renforcé les propriétés mécaniques adéquates pour l'usage auquel il est destiné.

La matière additionnelle présente dans les bandes de renforcement du tube selon l'invention comprend au moins une composition polymérique orientée. Elle peut comprendre une seule composition polymérique orientée. Alternativement, elle peut aussi comprendre un mélange de plusieurs compositions polymériques et éventuellement d'additifs non polymériques dont au moins un des polymères est orienté. Le polymère peut être tout polymère thermoplastique susceptible de pouvoir être présent dans les bandes sous forme orientée, c'est-à-dire ayant au moins 20 % en poids des chaînes moléculaires qui le composent disposées selon une même direction. De préférence la direction de l'orientation est celle de la longueur de la bande. On peut choisir pour polymère orienté tout type de polymère thermoplastique qui se prête bien à l'orientation de ses chaînes de molécules. Généralement, on utilise un polymère orienté dont la nature est la même que celle des polymères servant couramment à la production de tubes devant résister à la pression. Des exemples intéressants de tels polymères dans le cas d'un mandrin en polyéthylène haute densité (HDPE) sont, non limitativement, les résines HDPE multimodales et les résines réticulables.

Les résines multimodales sont celles qui présentent une distribution de masse moléculaire à plusieurs extrema. Les résines HDPE bimodales, à deux extrema, sont préférées.

Les résines HDPE réticulables sont des résines HDPE qui se comportent lors de leur mise en oeuvre comme des résines HDPE thermoplastiques traditionnelles et qui peuvent ensuite, après mise en forme, être réticulées et durcies par un procédé quelconque (action de peroxydes, irradiation, ...)

Si plusieurs polymères orientés sont présents, ils partagent la même direction d'orientation. Le polymère orienté des bandes peut être de même nature qu'un des polymères de la composition polymérique de base constituant le mandrin. Il peut aussi, au contraire, être un polymère non présent dans cette composition polymérique de base, si les circonstances d'utilisation l'exigent ou sont peu compatibles avec l'emploi d'un polymère identique.

Avantageusement, le tube renforcé selon l'invention comprend un nombre pair de couches de bandes de renforcement enroulées sur le mandrin.

De préférence, une couche d'adhésif est intercalée entre le mandrin et la couche de bandes adjacente, ainsi qu'entre chaque couche de bandes.

Par adhésif, on entend désigner tout adhésif compatible avec la composition du mandrin et celle des bandes de renforcement. L'adhésif le plus employé est généralement un adhésif polymère qui peut se présenter sous la forme d'un polyuréthane ou d'une polyoléfine fonctionnalisée. Par polyoléfine fonctionnalisée, on entend désigner toute polyoléfine comprenant, outre des unités dérivées d'oléfines, des unités monomériques fonctionnelles. Celles-ci peuvent être incorporées soit dans la chaîne principale de la polyoléfine, soit dans ses chaînes latérales. Elles peuvent également être incorporées directement dans le squelette de ces chaînes principales et latérales, par exemple par copolymérisation d'un ou de plusieurs monomères fonctionnels avec le ou les monomères oléfiniques ou encore résulter du greffage d'un ou de plusieurs monomères fonctionnels sur lesdites chaînes, ultérieurement à la fabrication de la polyoléfine. Plusieurs polyoléfines fonctionnalisées peuvent aussi être utilisées en mélange.

On choisit les unités monomériques fonctionnelles de la polyoléfine fonctionnalisée parmi les acides carboxyliques, les diacides carboxyliques et les anhydrides correspondant à ces diacides. Ces unités monomériques proviennent généralement de la copolymérisation ou du greffage d'au moins un monomère insaturé possédant les mêmes fonctions. Des exemples de monomères utilisables sont, non limitativement, l'acide acrylique, l'acide méthacrylique, l'acide maléique, l'acide fumarique, l'acide itaconique, l'anhydride maléique, l'anhydride fumarique et l'anhydride itaconique. De préférence, les unités monomériques fonctionnelles proviennent de la copolymérisation ou du greffage d'anhydride maléique.

De préférence, le nombre de couches et les angles des bandes de renforcement sont choisis de telle manière à conférer au tube fini une résistance au moins suffisante pour lui permettre de résister durablement aux contraintes exercées.

Le tube renforcé comprendra en général au moins deux couches de bandes de renforcement. Lorsqu'il comprend deux couches de bandes, elles présentent entre elles, par rapport à la direction du tube, un angle semblable, mais de signe opposé. Le vocable "semblable" a ici le même sens que celui explicité plus haut.

Lorsque le tube renforcé comprend plus de deux couches de bandes de renforcement, deux couches adjacentes quelconques de ce tube présentent, de préférence, un angle semblable et de signe opposé par rapport à la direction du tube.

Selon une forme particulière avantageuse de l'invention, les bandes de renforcement du tube sont enroulées

# EP 1 386 104 B1

à spires jointives. Plus avantageusement, ces bandes de renforcement sont aussi protégées par deux couches polymériques non orientées. Le terme "protégées" se comprend ici dans le sens d'une protection mécanique à l'encontre de toute altération d'origine mécanique qui résulterait de sollicitations de l'environnement extérieur au tube renforcé. De préférence, la composition polymérique de ces couches de protection est compatible avec la composition polymérique orientée de la couche de renforcement. De préférence encore, la première de ces couches, celle qui est la plus intérieure, est formée de bandes enroulées elles aussi à spires jointives. Avantageusement, la deuxième couche de protection, située à la périphérie extérieure du tube renforcé est une couche pleine tubulaire formée d'une seule pièce et servant de couche de finition. Par composition polymérique compatible avec une composition polymérique orientée, on entend toute composition polymérique miscible à l'état fondu à cette composition orientée, qui ne provoque pas de réaction physique ou chimique indésirable susceptible d'affecter l'orientation d'au moins un polymère de cette dernière.

Il est aussi particulièrement intéressant que la nature de chacun des constituants du tube soit choisie judicieusement en vue de permettre son recyclage et sa réutilisation, en mélange dans une des couches d'un nouveau tube. Cette faculté devrait dans ce cas pouvoir être garantie aussi bien lors de la fabrication d'un nouveau tube (par l'utilisation de cassés de fabrication) que sur un tube usagé, en fin de période d'utilisation.

L'invention concerne aussi un procédé pour la production d'un tube renforcé en matière plastique comprenant l'application par enroulement autour d'un mandrin tubulaire à base d'une composition polymérique, de bandes de renforcement comprenant une composition polymérique orientée, caractérisé en ce que les bandes sont choisies parmi celles qui vérifient la relation suivante:

$$\frac{IR}{IR_0} \geq 4$$

où:

**IR** est un indice de résistance de la bande de renforcement, calculé comme suit :

$$IR = \frac{\sigma}{\sqrt[3]{E}}$$

avec :

σ qui représente la valeur maximale de la contrainte atteinte lors d'un essai de traction des bandes dans le sens de l'orientation, pour un allongement correspondant au point de yield du mandrin ou, à défaut, au point de rupture de la bande si l'allongement en ce point de rupture est inférieur à celui de l'allongement au point de yield du mandrin,

**E** qui est le module élastique en traction des bandes orientées;

$$IR_0 = \frac{\sigma_0}{\sqrt[3]{E_0}}$$ est l'indice de résistance du mandrin;

$\sigma_0$ et **$E_0$** sont respectivement la contrainte au point de yield et le module élastique en traction du mandrin;

dans laquelle, σ, **E,** $\sigma_0$ et **$E_0$** sont exprimés dans les mêmes unités arbitraires de tension,
et en ce qu'il comprend au moins deux couches de bandes enroulées sur le mandrin, chaque couche étant constituée de bandes présentant un angle semblable et de signe opposé aux bandes de l'autre couche par rapport à la direction du tube.
Le point de yield et le vocable "semblable" ont ici les mêmes significations que celles déjà explicitées plus haut pour le tube renforcé.

Les bandes de renforcement peuvent être collées sur le mandrin et/ou sur la couche de bandes sous-jacente au moyen d'un adhésif. Les adhésifs utilisés sont les mêmes que ceux décrits *supra* pour le tube renforcé.

Selon une forme particulière du procédé conforme à l'invention, on préencolle les bandes de renforcement utilisées au moyen d'un adhésif activable par réchauffement.

L'emploi d'un adhésif de ce type offre l'avantage de limiter la durée d'échauffement des bandes de renforcement à celle strictement nécessaire au développement de l'effet adhésif, de manière à protéger au mieux le maintien de l'orientation de la composition polymérique des bandes de renforcement, propriété généralement connue pour se dégrader sous l'effet de la chaleur.

Selon cette forme de réalisation particulière du procédé conforme à l'invention, on peut en outre améliorer encore la protection de l'orientation moléculaire du polymère de la composition des bandes de renforcement en enroulant par-dessus celles-ci une bande mince de protection thermique qui comprend une composition polymérique non orientée de nature chimique compatible avec celle de la composition polymérique orientée des couches sous-jacentes. Ces bandes de protection sont collées aux bandes orientées au moyen d'une colle organique sans solvant ou au moyen d'une colle polymère fondant à une température suffisamment basse que pour ne pas altérer l'orientation des molécules de ces bandes de renforcement orientées.

L'épaisseur de cette bande dépend de l'importance de ses propriétés d'écran thermique et ne dépasse pas celle qui permet une relativement bonne stabilité de l'orientation moléculaire des couches sous-jacentes. Il est par ailleurs avantageux que cette bande de protection thermique soit fortement transparente au rayonnement infrarouge afin de permettre l'activation de la colle via un rayonnement de ce type, à l'exclusion d'autres sources de chaleur.

Selon une variante au procédé particulier conforme à l'invention, on dépose selon une technique d'extrusion-couchage par-dessus la bande mince de protection thermique, une couche extérieure de finition comprenant une composition polymérique non orientée compatible avec celle de la bande mince de protection thermique sous-jacente. Cette dépose peut avantageusement se faire à l'aide d'une filière circulaire entourant le tube renforcé au travers de laquelle on fait passer la couche de finition.

La couche extérieure de finition a pour but de calibrer de manière précise les dimensions extérieures du tube et de permettre la compatibilité avec des raccords posés par collage ou par thermosoudage.

Avantageusement, on règle l'épaisseur de la bande mince pour qu'elle serve d'écran thermique efficace, comme exposé ci-dessus, lors de l'extrusion-couchage de la couche de finition de manière à limiter au maximum la perte d'orientation de la composition polymérique orientée des bandes de renforcement.

Les exemples qui suivent sont donnés en vue d'illustrer l'invention, sans en limiter en aucune manière sa portée.

On a comparé des mesures de contrainte et les modules élastiques en traction de 4 polymères différents que l'on a utilisés pour fabriquer des bandes de 0,9 mm d'épaisseur. Ces bandes ont été enroulées autour d'un mandrin en polyéthylène haute densité (PEHD) en forme de tube de 3.85 mm d'épaisseur de paroi (dénommé TUB121 ci-après). Deux couches croisées de chacune de ces bandes ont été appliquées sur le mandrin en réalisant un angle de + 55 degrés et de - 55 degrés par rapport à la direction du mandrin, excepté pour le polymère HDPE cristallin type "Leeds1" où 4 couches de bandes (présentant les mêmes angles que les bandes des autres tubes) ont été nécessaires pour réaliser un enroulement cohérent. Dans le cas de ce dernier polymère HDPE cristallin, l'investissement nécessaire qui doit être réalisé pour le dispositif d'enroulage est doublé par rapport à celui des autres polymères examinés.

On a ensuite mesuré la pression d'éclatement instantanée du tube selon la norme ISO 9080

Les résultats obtenus sont donnés dans le tableau suivant :

| N° de l'essai | Type de tube/ bandes | Contrainte $\sigma$, MPa | Module élastiqué en traction, MPa | $IR/IR_0$ | Pression d'éclatement, bar |
|---|---|---|---|---|---|
| 1R | TUB121/néant (mandrin non renforcé) | 25 | 1000 | 1.0 | 40 |
| 2R | TUB121/HDPE orienté en fondu | 25 | 424 | 1.3 | 40 |
| 3 | TUB121/HDPE orienté 11-3 | 153 | 1741 | 5.1 | 100 |
| 4 | TUB121/HDPE orienté K17 | 220 | 2545 | 6.4 | 135 |
| 5R | TUB121/Leeds1 | 147 | 10209 | 2.7 | 90 |

Les essais N° 1R, 2R et 5R sont des essais de référence non conformes à l'invention. Les essais 3 et 4 sont conformes à l'invention. On voit que les tubes renforcés réalisés dans les essais 3 et 4, qui sont les seuls où le rapport des indices **$IR/IR_0$** est supérieur au nombre 4, présentent des pressions d'éclatement optimales, car les plus élevées et répondant aux spécifications requises pour l'usage visé par les tubes renforcés.

**Revendications**

1. Tube multicouche renforcé en matière plastique constitué d'un mandrin tubulaire à base d'une composition polymérique sur lequel sont enroulées des bandes de renforcement comprenant une composition polymérique orientée, comprenant au moins deux couches de bandes enroulées sur le mandrin, chaque couche étant constituée de bandes présentant un angle semblable et de signe opposé aux bandes de l'autre couche par rapport à la direction du tube, **caractérisé par le fait que** les bandes de renforcement vérifient la relation suivante :

$$\frac{IR}{IR_0} \geq 4$$

où :

IR est un indice de résistance de la bande de renforcement, calculé comme suit :

$$IR = \frac{\sigma}{\sqrt[3]{E}}$$

Avec:

σ qui représente la valeur maximale de la contrainte atteinte lors d'un essai de traction des bandes dans le sens de l'orientation, pour un allongement correspondant au point de yield du mandrin ou, à défaut, au point de rupture de la bande si l'allongement en ce point de rupture est inférieur à celui de l'allongement au point de yield du mandrin,
E qui est le module élastique en traction des bandes orientées ;

$$IR_0 = \frac{\sigma_0}{\sqrt[3]{E_0}}$$

est l'indice de résistance du mandrin ;
$\sigma_0$ et $E_0$ sont respectivement la contrainte au point de yield et le module élastique en traction du mandrin ;

dans laquelle, σ, E, $\sigma_0$ et $E_0$ sont exprimés dans les mêmes unités arbitraires de tension.

2. Tube selon la revendication 1, **caractérisé en ce qu'**il comprend un nombre pair de couches de bandes de renforcement enroulées sur le mandrin.

3. Tube selon la revendication 1 ou 2, **caractérisé en ce qu'**une couche d'adhésif est intercalée entre le mandrin et la couche de bandes adjacente, ainsi qu'entre chaque chouche de bandes.

4. Tube selon une quelconque des revendications précédentes, **caractérisé en ce que** les bandes de renforcement sont protégées par une première couche mince formée de bandes enroulées à spires jointives comprenant une composition polymérique non orientée compatible avec la composition polymérique orientée des couches de renforcement sous-jacentes et par une deuxième couche extérieure pleine tubulaire et formée d'une seule pièce de cette même composition polymérique non orientée, servant de couche de finition.

5. Procédé pour la production d'un tube renforcé en matière plastique

comprenant l'application par enroulement autour d'un mandrin tubulaire à base d'une composition polymérique, de bandes de renforcement comprenant une composition polymérique orientée,

le tube comprenant au moins deux couches de bandes enroulées sur le mandrin, chaque couche étant constituée de bandes présentant un angle semblable et de signe opposé aux bandes de l'autre couche par rapport à la direction du tube,

**caractérisé en ce que** les bandes sont choisies parmi celles qui vérifient la relation suivante :

$$\frac{IR}{IR_0} \geq 4$$

où:

IR est un indice de résistance de la bande de renforcement, calculé comme suit :

$$IR = \frac{\sigma}{\sqrt[3]{E}}$$

avec :

$\sigma$ qui représente la valeur maximale de la contrainte atteinte lors d'un essai de traction des bandes dans le sens de l'orientation, pour un allongement correspondant au point de yield du mandrin ou, à défaut, au point de rupture de la bande si l'allongement en ce point de rupture est inférieur à celui de l'allongement au point de yield du mandrin,

et **E** qui est le module élastique en traction des bandes orientées ;

$$IR_0 = \frac{\sigma_0}{\sqrt[3]{E_0}}$$ est l'indice de résistance du mandrin ;

$\sigma_0$ et $E_0$ sont respectivement la contrainte au point de yield et le module élastique en traction du mandrin ;

dans laquelle, $\sigma$, **E,** $\sigma_0$ et $E_0$ sont exprimés dans les mêmes unités arbitraires de tension.

6. Procédé selon la revendication précédente, **caractérisé en ce qu'**on préencolle les bandes de renforcement utilisées au moyen d'un adhésif activable par réchauffement.

7. Procédé selon la revendication 5 ou 6, **caractérisé en ce qu'**on enroule par-dessus les bandes de renforcement une bande mince de protection thermique comprenant une composition polymérique non orientée de composition chimique compatible avec celle de la composition polymérique orientée des couches de renforcement sous-jacentes.

8. Procédé selon la revendication précédente, **caractérisé en ce que** l'on dépose selon une technique d'extrusion-couchage par-dessus la bande mince de protection thermique, une couche extérieure de finition comprenant une composition polymérique non orientée compatible avec celle de la bande mince de protection thermique sous-jacente, à l'aide d'une filière circulaire au travers de laquelle on fait passer la couche de finition.

9. Procédé selon la revendication précédente, **caractérisé en ce que** l'épaisseur de la bande mince est réglée pour servir d'écran thermique efficace lors de l'extrusion-couchage de la finition de manière à limiter au maximum la perte d'orientation de la composition polymérique orientée des bandes de renforcement.

**Claims**

1. Reinforced multilayer plastic pipe consisting of a tubular mandrel based on a polymeric composition onto which are wound reinforcing tapes comprising an oriented polymeric composition, comprising at least two layers of tapes wound on the mandrel, each layer consisting of tapes having an angle similar to but of opposite sign to the tapes of the other layer relative to the direction of the pipe,
   **characterized in that** the reinforcing tapes satisfy the following relationship:

$$\frac{SI}{SI_0} \geq 4$$

   where SI is a strength index of the reinforcing tape, calculated as follows:

$$SI = \frac{\sigma}{\sqrt[3]{E}}$$

   where a represents the maximum value of the stress reached in a tensile test carried out on the tapes in the direction of orientation, for an elongation corresponding to the yield point of the mandrel, or, otherwise, to the failure point of the tape if the elongation at this failure point is below that of the elongation at the yield point of the mandrel, and E is the tensile elastic modulus of the oriented tapes;

   $SI_0 = \dfrac{\sigma_0}{\sqrt[3]{E_0}}$ is the strength index of the mandrel,

   where $\sigma_0$ and $E_0$ are the stress at the tensile yield point and the tensile elastic modulus of the mandrel, respectively, in which $\sigma$, E, $\sigma_0$ and $E_0$ are expressed in the same arbitrary tensile units.

2. Pipe according to Claim 1, **characterized in that** it comprises an even number of layers of reinforcing tapes wound on the mandrel.

3. Pipe according to Claim 1 or 2, **characterized in that** a layer of adhesive is interposed between the mandrel and the adjacent layer of tapes, and also between each layer of tapes.

4. Pipe according to any one of the preceding claims, **characterized in that** the reinforcing tapes are protected by a thin first layer formed from tapes wound with touching turns, comprising an unoriented polymeric composition compatible with the oriented polymeric composition of the subjacent reinforcing layers, and by a tubular solid outer second layer formed from a single piece of this same unoriented polymeric composition, serving as finishing layer.

5. Process for the production of a plastic reinforced pipe, comprising the application of reinforcing tapes comprising an oriented polymeric composition by winding them around a tubular mandrel based on a polymeric composition, the pipe comprising at least two layers of pipes wound on the mandrel, each layer consisting of tapes making an angle similar to but of opposite sign to the tapes of the other layer relative to the direction of the pipe,
   **characterized in that** the tapes are chosen from those that satisfy the following relationship:

$$\frac{SI}{SI_0} \geq 4$$

   where SI is a strength index of the reinforcing tape, calculated as follows:

$$SI = \frac{\sigma}{\sqrt[3]{E}}$$

where σ represents the maximum value of the stress reached in a tensile test carried out on the tapes in the direction of orientation, for an elongation corresponding to the yield point of the mandrel, or, otherwise, to the failure point of the tape if the elongation at this failure point is below that of the elongation at the yield point of the mandrel, and E is the tensile elastic modulus of the oriented tapes;

$$SI_0 = \frac{\sigma_0}{\sqrt[3]{E_0}} \text{ is the strength index of the mandrel,}$$

where $\sigma_0$ and $E_0$ are the stress at the tensile yield point and the tensile elastic modulus of the mandrel, respectively, in which σ, E, $\sigma_0$ and $E_0$ are expressed in the same arbitrary tensile units.

6.   Process according to the preceding claim, **characterized in that** the reinforcing tapes used are precoated with adhesive by using a heat-activatable adhesive.

7.   Process according to Claim 5 or 6, **characterized in that** a thin thermal protection tape is wound on top of the reinforcing tapes, said thermal protection tape comprising an unoriented polymeric composition with a chemical composition compatible with that of the oriented polymeric composition of the subjacent reinforcing layers.

8.   Process according to the preceding claim, **characterized in that** an external finishing layer is deposited on top of the thin thermal protection tape using an extrusion-lamination technique by means of a circular die through which the finishing layer is made to pass, said finishing layer comprising an unoriented polymeric composition compatible with that of the subjacent thin thermal protection tape.

9.   Process according to the preceding claim, **characterized in that** the thickness of the thin tape is regulated so as to serve as an effective heat shield during the extrusion-lamination of the finishing layer, so as to minimize the loss of orientation of the oriented polymeric composition of the reinforcing tapes.


**Patentansprüche**

1.   Mehrschichtiges verstärktes Rohr aus Kunststoff bestehend aus einem rohrförmigen Kern auf Basis einer polymeren Zusammensetzung, auf den Verstärkungsbänder gewickelt sind umfassend eine polymere orientierte Zusammensetzung,
umfassend wenigstens zwei Schichten von auf den Kern gewickelten Bändern, wobei jede Schicht aus Bändern besteht, die einen ähnlichen Winkel und eine zu den Bändern der anderen Schicht entgegen gesetzte Ausrichtung aufweisen, bezogen auf die Richtung des Rohres,
**dadurch gekennzeichnet, dass** die Verstärkungsbänder die nachfolgende Beziehung erfüllen:

$$\frac{IR}{IR_0} \geq 4$$

in der:

   **IR** ein Widerstandsindex des Verstärkungsbandes ist, berechnet wie folgt:

$$IR = \frac{\sigma}{\sqrt[3]{E}}$$

Wobei: σ den maximalen Wert der Spannung darstellte, der bei einem Zugversuch der Bänder in Orientierungsrichtung erreicht wird, für eine dem Yieldpunkt des Kerns entsprechende Dehnung, oder andernfalls, dem Zerreißpunkt des Bandes, wenn die Dehnung in diesem Zerreißpunkt geringer ist als diejenige der Dehnung im Yieldpunkt des Kerns,

**E** das Zugelastizitätsmodul der orientierten Bänder ist;

$$IR_0 = \frac{\sigma_0}{\sqrt[3]{E_0}}$$ Der Widerstandsindex des Kerns ist;

$\sigma_0$ und **$E_0$** jeweils die Spannungen im Yieldpunkt und das Zugelastizitätsmodul des Kerns sind;

Worin σ, **E,** $\sigma_0$ und **$E_0$** in den gleichen Spannungseinheiten ausgedrückt sind.

2. Rohr nach Anspruch 1, **dadurch gekennzeichnet, dass** diese eine gerade Anzahl an Schichten von Verstärkungsbändern aufweist, die auf den Kern gewickelt sind.

3. Rohr nach Anspruch 1 oder 2, **dadurch gekennzeichnet, dass** eine Haftschicht zwischen dem Kern und der angrenzenden Schicht von Bändern angeordnet ist, sowie zwischen jeder Schicht der Bänder.

4. Rohr nach einem der vorhergehenden Ansprüche, **dadurch gekennzeichnet, dass** die Verstärkungsbänder geschützt sind durch eine erste dünne Schicht, gebildet aus gewickelten Bänder in aneinander grenzenden Windungen, umfassend eine polymere nicht orientierte Zusammensetzung, die mit der polymeren orientierten Zusammensetzung der darunter liegenden Verstärkungsschichten kompatibel ist, und durch eine zweite äußere volle rohrförmige Schicht, die einstückig ausgebildet ist, aus der gleichen polymeren nicht orientierten Zusammensetzung, die als abschließende Schicht dient.

5. Verfahren zur Herstellung eines verstärkten Rohrs aus Kunststoff, umfassend die Aufbringung durch Aufwickeln auf einen rohrförmigen Kern auf Basis einer polymeren Zusammensetzung, von Verstärkungsbändern, umfassend eine polymere orientierte Zusammensetzung,
wobei das Rohr wenigstens zwei Schichten von auf den Kern gewickelten Bändern umfasst, wobei jede Schicht aus Bändern besteht, die einen ähnlichen Winkel und eine zu den Bändern der anderen Schicht entgegen gesetzte Ausrichtung aufweisen, bezogen auf die Richtung des Rohres,
**dadurch gekennzeichnet, dass** die Bänder ausgewählt werden aus denjenigen, die die nachfolgende Beziehung erfüllen:

$$\frac{IR}{IR_0} \geq 4$$

in der:

**IR** ein Widerstandsindex des Verstärkungsbandes ist, berechnet wie folgt:

$$IR = \frac{\sigma}{\sqrt[3]{E}}$$

Wobei: σ den maximalen Wert der Spannung darstellte, der bei einem Zugversuch der Bänder in Orientierungsrichtung erreicht wird, für eine dem Yieldpunkt des Kerns entsprechende Dehnung, oder andernfalls, dem Zerreißpunkt des Bandes, wenn die Dehnung in diesem Zerreißpunkt geringer ist als diejenige der Dehnung im Yieldpunkt des Kerns,

**E** das Zugelastizitätsmodul der orientierten Bänder ist;

$$IR_0 = \frac{\sigma_0}{\sqrt[3]{E_0}}$$ Der Widerstandsindex des Kerns ist;

$\sigma_0$ und **E$_0$** jeweils die Spannungen im Yieldpunkt und das Zugelastizitätsmodul des Kerns sind;

Worin $\sigma$, **E**, $\sigma_0$ und **E$_0$** in den gleichen Spannungseinheiten ausgedrückt sind.

6. Verfahren nach dem vorhergehenden Anspruch, **dadurch gekennzeichnet, dass** man vorab die verwendeten Verstärkungsbänder mit einem Klebemittel versieht, mittels eines durch Erwärmung aktivierbaren Klebstoffs.

7. Verfahren nach einem der Ansprüche 5 oder 6, **dadurch gekennzeichnet, dass** man auf die Verstärkungsbänder eine dünne thermische Schutzschicht aufwickelt, umfassend eine polymere nicht orientierte chemische Zusammensetzung, die kompatibel ist mit der polymeren orientierten Zusammensetzung der darunter liegenden Verstärkungsschichten.

8. Verfahren nach einem der vorhergehenden Ansprüche, **dadurch gekennzeichnet, dass** man mittels einer Aufextrusionstechnik auf die dünne thermische Schutzschicht eine äußere abschließende Schicht aufbringt, umfassend eine polymere nicht orientierte Zusammensetzung, die mit derjenigen der dünnen darunter liegenden thermischen Schutzschicht kompatibel ist, mit Hilfe einer ringförmigen Düse, durch die hindurch man die abschließende Schicht fördert.

9. Verfahren nach einem der vorhergehenden Ansprüche, **dadurch gekennzeichnet, dass** die Stärke der dünnen Schicht geregelt wird, um als thermisch wirksamer Schirm während der Aufextrusion der abschließenden Schicht zu dienen, derart, dass man den Verlust an Orientierung der polymeren orientierten Zusammensetzung der Verstärkungsbänder soweit wie möglich begrenzt.

**EP 1 386 104 B1**

**RÉFÉRENCES CITÉES DANS LA DESCRIPTION**

**Documents brevets cités dans la description**

- US 4093004 A
- EP 0697553 A